# EUROPEAN PATENT APPLICATION

(11) **EP 4 841 096 A1**
(43) Date of publication of application: **18.11.2026**
(21) Application number: 25176450.2
(22) Date of filing: 14.05.2025
(51) Int. Cl.: F02K 9/56, F02K 9/58

(54) **MULTIVARIABLE CLOSED-LOOP CONTROLLER OF A LIQUID-PROPELLANT ROCKET ENGINE**

(71) Applicant: ArianeGroup GmbH, 82024 Taufkirchen (DE)
(72) Inventor: Pérez Roca, Sergio, 71636 Ludwigsburg (DE)
(74) Representative: Schicker, Silvia

(57) **Abstract**

The present disclosure relates to data structure for use in a multivariable closed-loop control of a liquid-propellant rocket engine, LPRE (100), the data structure defining a non-linear model for model predictive control, MPC, the non-linear model being linearizable at least in a reference point in the operating range of the LPRE and the data structure comprising: a state vector ***x*** having 3 state variables being i) a combustion chamber pressure p_{cc}, ii) a fuel mass flow ṁ_{fu} and iii) an oxidizer mass flow ṁₒₓ; a control vector ***u*** having 2 controllable inputs being i) a fuel throttle valve opening degree A_{VF} and ii) an oxidizer throttle valve opening degree A_{VO}; and an output vector ***y*** having 3 measured variables being i) a measured combustion chamber pressure p_{cc,meas}, ii) a fuel injection pressure p_{injF} and iii) an oxidizer injection pressure p_{injO}, wherein the model is linearizable in the reference point to yield a linear system of equations. The present disclosure also relates to a filter for use in a multivariable closed-loop control of an LPRE, the filter having a linear filter function that uses the non-linear model for MPC according to the data structure, wherein the non-linear model is linearized in the reference point to yield the linear equation ***x_{KF} = C⁻¹*** · ***y**,* where ***C*** is a system observation matrix so as to reconstruct the state vector ***x_{KF}*** from the output vector **y.** The present disclosure also relates to a multivariable closed-loop controller of an LPRE, the multivariable closed-loop controller using the non-linear model for MPC according to the data structure, wherein the model is linearized in the reference point to yield the linear equation ***ẋ*** *=* ***Ax* + *Bu,*** where ***A*** and ***B*** are matrices having stable poles to yield a controllable system, and the state vector ***x*** is reconstructed based on the output vector ***y**.*

## Description

### Technical Field

The present disclosure generally relates to a multivariable closed-loop controller of a liquid-propellant rocket engine (LPRE). In particular, the present disclosure relates to a thrust and mixture-ratio multivariable closed-loop controller of a throttleable pressure-fed LPRE.

### Background

Traditional on-board thrust control of LPREs is performed in open loop (OL) by opening propellant (e.g. fuel and oxidizer) feed valves at previously selected and trimmed operating point maps according to inlet pressures. Some limited studies using closed-loop controllers with state feedback or of the PID type have been published or patented in EP 3 153 691 B1, FR 3 039 859 B1 and US 8 019 494 B1 (as surveyed in PÉREZ-ROCA S. et al., "A survey of automatic control methods for liquid-propellant rocket engines", Progress in Aerospace Sciences, vol. 107, pp. 63-84, May 2019). These studies aim at correcting certain throttle valves' openings according to certain feedback measurements and to steady-state commanded targets in a given operating domain.

In some cases, a multi-engine propellant-flow management calculation strategy is employed (see US 8 019 494 B1), in others a more multivariable approach with combustion-chamber pressure/thrust control of a single engine as well as mixture-ratio estimations is implemented (see FR 3 039 859 B1). Advanced multivariable control methods are anticipated as the trend to solve the needs for stable deep throttleability and accurate setpoint tracking in degraded conditions, for instance with the use of Machine-Learning methods, such as Reinforcement Learning (see DRESIA, Kai, et al., "Rocket Engine Control with Neural Networks: Experimental Results of the LUMEN Turbopump Test Campaign", AIAA SCITECH 2023 Forum, 2023, page 137) or with robust physics-based methods, such as the proposed here, slightly inspired by previous work (see PÉREZ-ROCA S. et al., "Model-based Robust Transient Control of Reusable Liquid-Propellant Rocket Engines", IEEE Transactions on Aerospace and Electronic Systems no. 57, volume 1, pp. 129-144, 2020).

However, control of throttleable engines using a closed-loop (CL) controller or any related kind of advanced control method still needs to be improved concerning precision, speed and robustness.

### Summary

Accordingly, there is a need for an implementation of an improved multivariable closed-loop controller of an LPRE that avoids one or more of the above-stated problems of the prior art.

These objects are solved by the present invention as defined by the independent claims. Preferred embodiments are defined by the dependent claims.

In addition, the present disclosure enables the following advantages:
- Simultaneous control (precise tracking) of combustion-chamber pressure and mixture ratio (indirectly via mass-flow estimation with injection pressures) within the operating range of a pressure-fed LPRE, enabling a higher performance, robustness (see below) and throttleability at lower residuals.
- Quick, stable and controlled transition from one operating point to the next one e.g. in a 20 Hz update manner. Step, ramp changes or continuous command variations are manageable by the controller.
- Robustness to internal parameter variations (demonstrated in simulation, such as actuator capabilities, supplied propellants interface pressures, and external perturbations, such as sensor noise and offsets).
- Methodology developed for storable-propellant engine but applicable to other engine/cycles with corresponding configuration changes.
- Real-time exportability (of data structure, controller and filter used) and test-bench verification with its initial version.

In a first aspect to better understand the present disclosure, there is provided a data structure for use in a multivariable closed-loop control of a liquid-propellant rocket engine, LPRE, the data structure defining a non-linear model for model predictive control, MPC, the non-linear model being linearizable at least in a reference point in the operating range of the LPRE and the data structure comprising a state vector ***x*** having 3 state variables being i) a combustion chamber pressure p_{cc}, ii) a fuel mass flow ṁ_{fu} and iii) an oxidizer mass flow ṁₒₓ; a control vector ***u*** having 2 controllable inputs being i) a fuel throttle valve opening degree A_{VF} and ii) an oxidizer throttle valve opening degree A_{VO}; and an output vector ***y*** having 3 measured variables being i) a measured combustion chamber pressure p_{cc,meas}, ii) a fuel injection pressure p_{injF} and iii) an oxidizer injection pressure p_{injO}, wherein the model is linearizable in the reference point to yield a linear system of equations.

In a first refinement of the first aspect, the data structure preferably further comprises a non-controllable vector ***w*** having 2 time-dependent, non-controllable variables affecting the output vector ***y*,** being fuel tank pressure p_{TankF} and oxidizer tank pressure p_{TankO}.

In a second aspect of the present disclosure, there is provided a filter for use in a multivariable closed-loop control of a liquid-propellant rocket engine, LPRE, the filter having a linear filter function that uses the non-linear model for model predictive control, MPC, according to the data structure of the first aspect (and its refinement), wherein the non-linear model is linearized in the reference point to yield the linear equation ***x_{KF}** = **C⁻¹** · **y**,* where ***C*** is a system observation matrix so as to reconstruct the state vector ***x_{KF}*** from the output vector ***y.***

In a first refinement of the second aspect, the filter preferably is a linear Kalman filter. In addition or alternatively, the combustion chamber pressure p_{cc,meas}, the fuel injection pressure p_{injF} and the oxidizer injection pressure p_{injO} preferably are values measured by at least one sensor, and the fuel mass flow ṁ_{fu} and the oxidizer mass flow ṁₒₓ preferably are reconstructed based on the measured combustion chamber pressure p_{cc,meas}, the fuel injection pressure p_{injF} and the oxidizer injection pressure p_{injO} without involvement of any dedicated mass flow sensor.

In a second refinement (involving also the first refinement) of the second aspect, the filter is preferably further configured to receive, as input, an extended output vector ***yₘ*** having the i) measured combustion chamber pressure p_{cc,meas}, ii) the fuel injection pressure p_{injF}, iii) the oxidizer injection pressure p_{injO}, iv) a fuel injection temperature T_{injF} and v) an oxidizer injection temperature T_{injO}, and a non-controllable vector ***w*** having 2 time-dependent, non-controllable variables affecting the extended output vector ***yₘ**,* being fuel tank pressure p_{TankF} and oxidizer tank pressure p_{TankO}.

In a third aspect of the present disclosure, there is provided a multivariable closed-loop controller of a liquid-propellant rocket engine, LPRE (100), the multivariable closed-loop controller using the non-linear model for model predictive control, MPC, according to the data structure of the first aspect (and its refinement), wherein the model is linearized in the reference point to yield the linear equation ***ẋ*** = ***Ax*** + ***Bu**,* where ***A*** and ***B*** are matrices having stable poles to yield a controllable system, and the state vector ***x*** is reconstructed based on the output vector ***y.***

In a first refinement of the third aspect, the multivariable closed-loop controller preferably receives input from at least one sensor to measure the combustion chamber pressure p_{cc,meas}, the fuel injection pressure p_{injF} and the oxidizer injection pressure p_{injO}, and the multivariable closed-loop controller preferably does not receive input from any mass flow sensor so that the fuel mass flow ṁ_{fu} and the oxidizer mass flow ṁₒₓ are reconstructed based on the measured combustion chamber pressure p_{cc,meas}, the fuel injection pressure p_{injF} and the oxidizer injection pressure p_{injO}. If so, the measured combustion chamber pressure p_{cc,meas} preferably is measured directly after injection into a thruster of the LPRE and is then corrected by a correction factor CF_{pcc,meas} to compute the pressure at the throat of the thruster to become the combustion chamber pressure p_{cc} of the state vector ***x*.**

In a fourth aspect of the present disclosure, there is provided a closed-loop control system comprising the multivariable closed-loop controller of the third aspect (and its refinement) configured to control the LPRE as a control target and the filter of the second aspect (and its refinements) in a feedback loop from the multivariable closed-loop controller.

In a first refinement of the fourth aspect, linearization and control operation is preferably performed in real-time. In that case, linearization and control operation preferably is iterated discretely once per predetermined time period. The time period is particularly preferably 50 ms.

In a second refinement of the fourth aspect, the closed-loop control system preferably further comprises a feed-forward, FF, component in an open-loop portion of the system, wherein the FF component is configured to: receive, as input, high-level reference values being i) a reference mixture ratio MR_{ref} of fuel and oxidizer and ii) a reference combustion chamber pressure p_{cc,ref}, and output, based on the input, a reference vector ***yᵣ*** comprising i) the reference combustion chamber pressure p_{cc,ref}, ii) a reference fuel injection pressure p_{injF,ref} and iii) a reference oxidizer injection pressure p_{injO,ref}, wherein a difference between the reference vector ***yᵣ*** as a target vector and the output vector ***y*** as an actual vector yields an error vector ***yₑᵣᵣ*** to be input into the multivariable closed-loop controller. In that case, the FF component preferably is further configured to output, based on the input, at least one additional reference value of iv) a reference fuel mass flow ṁ_{fu,ref}, v) a reference oxidizer mass flow ṁ_{ox,ref}, vi) a reference fuel throttle valve opening degree A_{VF, ref} and vii) a reference oxidizer throttle valve opening degree A_{VO,ref}, and provide the reference vector ***yᵣ*** and the at least one additional reference value to the multivariable closed-loop controller and the filter so as to enable linearization at the reference point.

Without loss of generality, the present disclosure can be summarized as follows:
- The present disclosure follows the following goals:
   ∘ Final control variable: using a space propulsion engine - throttleable (SPE-T) as a non-limiting example, thrust approx. 3.4 to 5 kN (70% to 120% nominal thrust); accuracy +/-1.5%:
      ▪ Direct function of combustion chamber pressure p_{CC} (measured, correlated to thrust) and of the mixture ratio Oxidizer/Fuel (O/F), also to be controlled ideally at +/-0.5% accuracy, +/-1.0% accuracy is also acceptable.
   ∘ Actuating variables (control inputs **u):** 2 throttleable valves "VO" and "VF" with their dynamic limitations (saturations and opening speeds).
   ∘ Study of stability margins/robustness + study of controllability/observa-bility (with available sensors/actuators):
      ▪ Control-relevant influences such as key engine-parameters variations (e.g. tank pressures - measured).
      ▪ Mass flows (states in models) shall be estimated via delta-pressure and temperature measurements at injection, since flight-qualified mass flow sensors are not available.
- Multivariable control of combustion-chamber pressure (with a direct proportional relation to thrust) and mixture ratio (MR) is achieved in this approach by means of an MPC (Model Predictive Control) controller that makes use of a newly, specifically developed state-space model of a storable-propellants rocket engine. The feedback inputs to the controller are pressure and temperature measurements at the combustion chamber as well as injection heads (for estimating mass flows and controlling MR). This measurement vector serves to reconstruct the state vector, comprising the chamber pressure and fuel and oxidizer mass flows, via a Kalman Filter estimator. Tracking of commanded set-points is accomplished by providing the MPC controller with a linearization of the developed nonlinear state-space model around those set-points (in terms of measured outputs, states and control inputs, as computed via a test-based OL feed-forward block) and hence adapting it to the targeted operating regime.
- Proposed is a combination of e.g. MATLAB-Simulink^{®} toolbox-based control method MPC + mass-flow estimation method Kalman filter (KF) applied to a liquid-propellant rocket engine, making use of a newly developed state-space modelling approach via 0-D conservation equations based on engine parameters (i.e., engine modelling-for-control and for-estimation approach and proposed control loop with estimator). This combined methodology is specifically applied to a storable-propellants engine but can be extrapolated to other cycles or configurations, e.g. with turbopumps, with other propellants, etc. Aspects of the present disclosure:
   ∘ Aspect #1: Derivation of a nonlinear state-space model of a throttleable pressure-fed LPRE via 0-D physical equations and engine characterizations, linearizable within the whole operating domain for engine-controller development, e.g. enabling aspect #2 and #3.
   ∘ Aspect #2: Simultaneous, multivariable MPC of combustion-chamber pressure p_{cc} (measured) and mixture ratio MR (indirectly estimated via aspect #3), making use of a linearized aspect #1 within the operating range of a pressure-fed, storable LPRE, enabling a higher performance, robustness and throttleability at lower residuals.
   ∘ Aspect #3: Model-based Kalman Filter mass-flow estimator using particular feedback inputs to the controller (combustion chamber pressure and injector pressures and temperatures). The measurement vector serves to reconstruct the state vector (including mass flows) via a Kalman Filter.

### Brief Description of the Drawings

The embodiments of the technique presented herein are described herein below with reference to the accompanying drawings, in which:
- Figs. 1 and 1A: show an LPRE being a control target of the multivariable closed-loop controller in a closed-loop control system according to the present disclosure;
- Fig. 2: shows a closed-loop control system comprising a multivariable closed-loop controller, an (optional) feed-forward (FF) component and a (Kalman) filter according to the present disclosure;
- Fig. 2A: shows the closed-loop control system comprising the multivariable closed-loop controller according to the present disclosure in greater detail;
- Figs. 3A to 3D: show measurement protocols attainable via the multivariable closed-loop controller in a closed-loop control system according to the present disclosure;
- Figs. 4A to 4D: show further measurement protocols attainable via the multivariable closed-loop controller in a closed-loop control system according to the present disclosure;
- Figs. 5A to 5D: show further measurement protocols attainable via the multivariable closed-loop controller in a closed-loop control system according to the present disclosure; and
- Figs. 6A to 6D: show further measurement protocols attainable via the multivariable closed-loop controller in a closed-loop control system according to the present disclosure.

### Detailed Description

In the following description, for purposes of explanation and not limitation, specific details are set forth in order to provide a thorough understanding of the technique presented herein. It will be apparent to one skilled in the art that the present technique may be practiced in other embodiments that depart from these specific details.

Moreover, those skilled in the art will appreciate that the services, functions and steps described herein may be implemented using software functioning in conjunction with a programmed microprocessor or using an Application Specific Integrated Circuit (ASIC), a Digital Signal Processor (DSP) or general-purpose computer. It will also be appreciated that while the following embodiments are described in the context of methods and devices, the technique presented herein may also be embodied in a computer program product as well as in a system comprising a computer processor and a memory coupled to the processor, wherein the memory is encoded with one or more programs that execute the services, functions and steps disclosed herein. This applies especially to the aspects of i) an automated process for manufacturing/forming the data structure, controller and filter of the present disclosure and of ii) simulation processes for the data structure, controller and filter of the present disclosure.

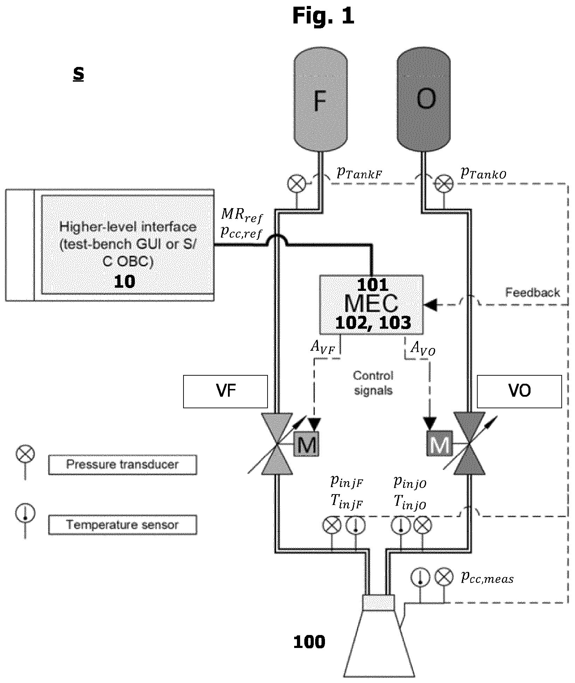

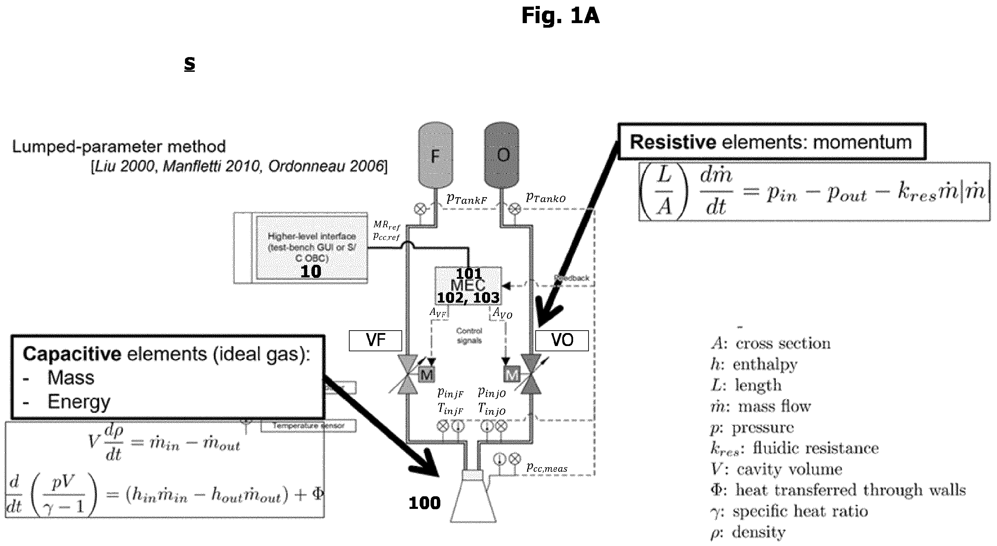

Figs. 1 and 1A show an LPRE being a control target of the multivariable closed-loop controller in a closed-loop control system according to the present disclosure. In more detail, Figs. 1 and 1A show a general simplified system overview of a closed-loop control system S comprising i) a storable-propellants pressure-fed LPRE 100, ii) a Main Engine Controller (MEC) (in turn comprising a (multivariable closed-loop) controller 101, an FF component 102 and a (Kalman) filter 103 described herein below), iii) valves and iv) sensor subcomponents (in particular, temperature sensors and pressure transducers). A graphical user interface (GUI), not shown, may be used for ground tests, or otherwise, connection to a spacecraft (S/C) on-board computer (OBC) expected for flight may be made.

### Introduction

The general mode of operation of a bi-propellant engine is based on the fact that two liquid propellants (such as fuel F and oxidizer O in Figs. 1 and 1A) are injected into the engine's combustion chamber and thrust is generated by the combustion that takes place, either spontaneously or triggered. Since the thrust generation of the engine mainly depends on the combustion-chamber pressure p_{cc}, and this is itself mainly dependent on the mass flow ṁ of propellants (e.g. ṁ_{fu} of fuel and ṁₒₓ of the oxidizer) injected, the thrust-level variation principle can be simplified to a simple static conversion of the "propellant-to-combustion chamber pressure" equation: ${p}_{cc} = {f}_{\left(mass flow\right)} = \frac{\dot{m} C *}{{A}_{th}}$ (where C* mainly depends on the given mixture ratio and Aₜₕ is combustion chamber throat area).

The basic idea of thrust control is to change the mass flow rates via throttle valves, which are implemented upstream of the main engine shutoff valves and thus determine the mass flow rate of the propellants. The output mass flow rate of the throttle valve mainly depends on the one hand on the pressure difference along the feedline (tanks to chamber) and on the other hand on the degree of opening and characteristics of the throttle valve. Thus, there is a coupling between the established mass flows and the pressure in the chamber, since the generated pressure also depends on the provided flow.

To regulate the mass flow in the proposed concept, throttle valves may be used, for which the control system assumes that the commanded flow-regulation valves can be adjusted precisely to independently set their opening degree within a lower-level control loop.

The commands sent to the valves are traditionally performed in OL for LPRE (see background section), which is effective in the case that no environmental variations or any other types of disturbances or engine evolution/aging (parametric evolution) drive the system to off-nominal behaviors. In general, there is a low risk of instability since liquid-propellant rocket engines are naturally stable from the control perspective, but in open-loop control there is no high robustness guaranteed. Accuracy could be maintained in known scenarios at these known conditions, but is not guaranteed outside of the precalculated domains. In order to maintain the tracking errors within engine tolerance, the allowable domain would need to be limited for taking margins into account.

However, since there is a need for engine usage in certain missions (e.g. planetary landers) within specified throttling domains at varying conditions, modelling/characterization uncertainty and environment variations due to the aforementioned influences have to be dealt with. Thus, it seems necessary to estimate the generated thrust level via combustion chamber pressure p_{cc} and mixture ratio MR and to correct them accordingly. Therefore, several transducers/sensors are considered in this approach to close the loop, measuring the propellant pressures p_{injF}, p_{injO} and temperatures T_{injF}, T_{injO}, as well as the combustion chamber pressure p_{cc}, which is correlatable to thrust, since thrust is not directly measured. No mass flows are expected to be measured on flight due to the current lack of reliable, qualified mass-flow meters for space applications. Hence, the proposed solution here does not consider these direct measurements in order to face a representative flight scenario. An estimation approach has been developed instead, as presented herein below.

Control goals are defined as maintaining tracking accuracies (or final static errors at each commanded operating point, OP) of 1.5% with respect to set values in pressure/thrust and ideally of 0.5% in mixture ratio, while facing realistic flight-like degraded scenarios such as sensor noise or parametric variations (engine/actuator aging/alterations). A continuous variation of the commanded point as often as every control time step (e.g. 20 Hz) shall be manageable by the control loop. The maximum capabilities of the two available integrated actuators (valves) in terms of opening ranges and speeds need to be respected in order not to fall into unwanted coupling with the lower-level loop (e.g. oscillations).

### Modelling-for-control and for-estimation approach

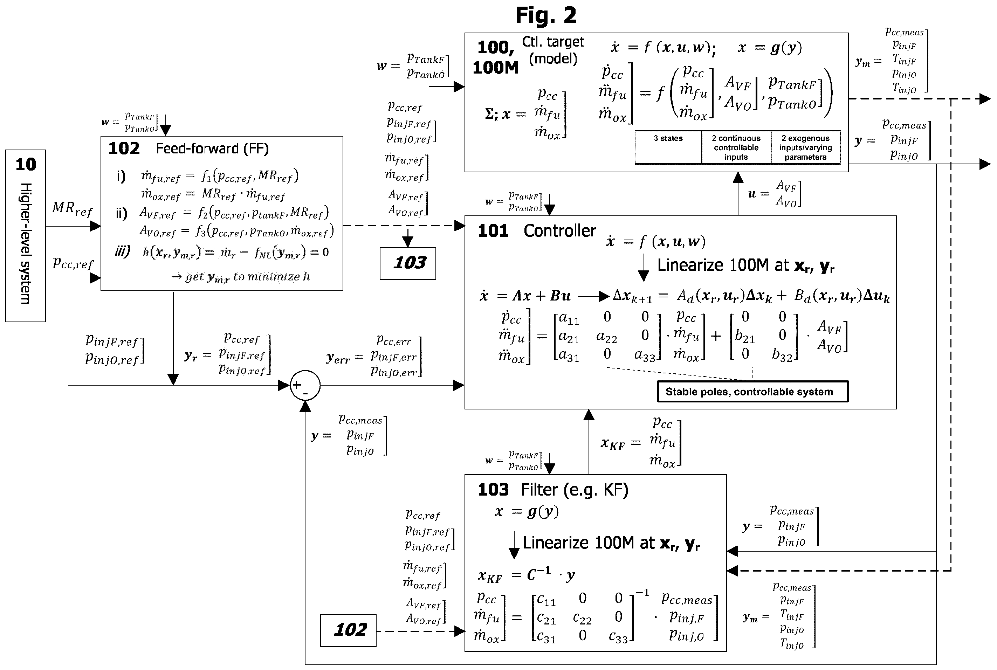

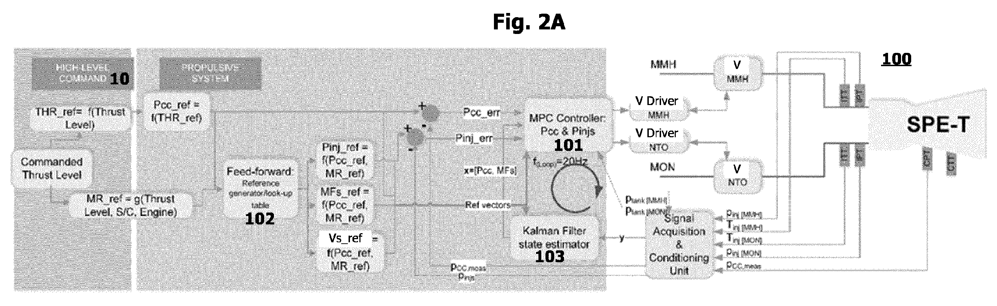

Fig. 2 shows a closed-loop control system S comprising the multivariable closed-loop controller 101, the (optional) FF component 102 and the (Kalman) filter 103 according to the present disclosure (the controller 101, the FF component 102 and the filter 103 are also summarized under the term "MEC" in this description). Fig. 2A shows the closed-loop control system S comprising the multivariable closed-loop controller 101, the (optional) FF component 102 and the (Kalman) filter 103 according to the present disclosure in greater detail. In more detail, Fig. 2 shows an evolved thrust & MR closed-loop control system S architecture (comprising the MEC, i.e., controller 101 + filter 103 + (optionally) FF component 102), including command from higher-level system 10, e.g. in test-bench configuration.

Shown is a closed-loop control system S comprising a control target 100 (e.g. the LPRE) that is modelled by a data structure/model 100M, the (multivariable closed-loop) controller 101, the (optional) FF component 102 and the (Kalman) filter 103. The data structure 100M for use in a multivariable closed-loop control of the LPRE 100, the data structure defining a non-linear model for MPC. The non-linear model being linearizable at least in a reference point in the operating range of the LPRE 100 and the data structure 100M comprising a state vector ***x*** having 3 state variables being i) a combustion chamber pressure p_{cc}, ii) a fuel mass flow ṁ_{fu} and iii) an oxidizer mass flow ṁₒₓ; a control vector ***u*** having 2 controllable inputs being i) a fuel throttle valve opening degree A_{VF} and ii) an oxidizer throttle valve opening degree A_{VO}; and an output vector ***y*** having 3 measured variables being i) a measured combustion chamber pressure p_{cc,meas}, ii) a fuel injection pressure p_{injF} and iii) an oxidizer injection pressure p_{injO}, wherein the model is linearizable in the reference point to yield a linear system of equations.

Notably, the data structure 100M (and the model defined by it) may be stored (and distributed) e.g. on a dedicated computer-readable medium. For instance, the (MPC) controller 101 uses a linearization (in the reference point) of the developed non-linear state-space model (data structure 100M) of the control target 100 to calculate the appropriate control action by solving an optimization problem.

Further notably, when in this disclosure a vector is described as "having" a number of variables/entries, this can be interpreted both as "comprising" said variables/entries (in the sense that the vector may comprise also additional variables/entries) and as "consisting of" said variables/entries (in the sense that the vector contains exactly no more and no less than the named variables/entries).

In order to develop, test and validate the system S (comprising the MEC in turn comprising the controller 101, the filter 103 and (optionally) the FF component 102) prior to its integration in the engine system S for hot-firing test campaigns, a simulation benchmark has been established with two main engine simulators or digital twins, which are stimulated by the controller according to its provided feedback on the required measurements. The main simulator or plant has been a multi-physical (thermo-fluid-dynamic) model based e.g. on in-house transient code (so-called SMART, validated during the past twenty years - see e.g. Boronine, E., & Frey, M.: "SMART code-A Versatile System Simulation Tool for Rocket Applications", Space Propulsion Conference, Cologne, Germany, May 2014), which presents the maximum accuracy by means of its detailed parameterization and dynamic description at a very small time step. For speeding up the development, another faster simulator has been used, i.e., a neural network based on test and simulation data, which has the advantage of running in minutes at an acceptably high accuracy level for controller validation.

These plant models are built from assumptions and mainly from characterization data of the engine assembly. In order to synthesize a model-based controller, a novel model-for-control in the state-space formalism has been developed. The main source of engine's parametric information used in this model for control is the multi-physical SMART model, which is anchored to test-bench characteristics.

According to the present disclosure, the fuel mass flow ṁ_{fu} and the oxidizer mass flow ṁₒₓ preferably are reconstructed based on the measured combustion chamber pressure p_{cc,meas}, the fuel injection pressure p_{injF} and the oxidizer injection pressure p_{injO}.

That is, the state-space model (data structure 100M) can be defined by its inputs/outputs:
- Control inputs **(*u*):**
   ∘ Fuel throttle valve opening degree (area) [A_{VF}].
   ∘ Oxidizer throttle valve opening degree (area) [A_{VO}].
   ∘ Shut-off/discrete valves preferably are not included in the control inputs vector, since they are mainly used during the sequential phases and do not enhance continuous controllability.
- Time-dependent, non-controllable (exogenous) inputs (***w***), affecting the final values:
   ∘ Fuel tank pressure [p_{TankF}].
   ∘ Oxidizer tank pressure [p_{TankO}].
- Measured outputs (components of the full measurement outputs vector ***yₘ***):
   ∘ Combustion chamber pressure [p_{cc,meas}] (the measured combustion chamber pressure p_{cc,meas} preferably is measured directly after injection into a thrust chamber of the LPRE and is then corrected by a correction factor CF_{pcc,meas} to compute the pressure at the throat of the thruster to become the combustion chamber pressure p_{cc} of the state vector ***x*-** in other words, measured right after injection, a correction factor CF_{pcc,meas} is needed to compute the pressure at the throat - state in ***x-***as defined below).
   ∘ Inlet pressures and temperatures [p_{injF}, p_{injO}, T_{injF}, T_{injO}] (injection pressures and temperatures).
   Accordingly, these measurements do not dynamically correspond to states in the selected modelling approach. In other words, no differential equations are used to link these measurements to the non-measured mass flows and the chamber pressure. Nonlinear static equations are used to establish their relationship to the states (originally ***x*** = *g(**yₘ**)*, as described in the filter paragraph hereinbelow).

The dynamic behavior of the engine can hence be generally expressed via the standard nonlinear representation, $\frac{d}{dt} x = \dot{x} = f \left(x, u, w\right)$ ***y** = g(**x**)* (originally in the form ***x** = g(**yₘ**)*, manipulated and linearized to $y = C \left({y}_{m , r} {x}_{r}\right) ⋅ x$ with $y = \left.\begin{matrix}{p}_{cc , meas} \\ {p}_{injF} \\ {p}_{injO}\end{matrix}\right] , {y}_{m} = \left.\begin{matrix}{p}_{cc , meas} \\ {p}_{injF} \\ {T}_{injF} \\ {p}_{injO} \\ {T}_{injO}\end{matrix}\right]$ $x = \left.\begin{matrix}{p}_{cc} \\ {\dot{m}}_{fu} \\ {\dot{m}}_{ox}\end{matrix}\right] ,$ $u = \left.\begin{matrix}{A}_{VF} \\ {A}_{VO}\end{matrix}\right] ,$ $w = \left.\begin{matrix}{p}_{TankF} \\ {p}_{TankO}\end{matrix}\right] ,$ with *f(**x, u, w**)* as a highly nonlinear complex set of ordinary differential equations (ODEs) and *g(**x**)* as a nonlinear, static relationship between injection quantities and mass flows. The output vector ***y*** expresses the selection of measured quantities to be tracked, while ***yₘ*** also includes the injection temperatures, whose measurement is used to determine the linearized ***C*** matrix at each time step to increase accuracy, but whose tracking is not representative or convenient to correspond to a given mixture ratio.

The state vector ***x*** has been determined during the modelling activities while selecting the appropriate differential equations. The proposed main approach resides in the derivation of physical parametric nonlinear models based on the fundamental mass, momentum and energy conservation equations in differential form. Different ODEs have been expanded in order to represent at a certain accuracy the temporal evolution of the main engine variables.

According to the present disclosure, the measured combustion chamber pressure p_{cc,meas} preferably is measured directly after injection into a thruster of the LPRE and is then corrected by a correction factor CF_{pcc,meas} to compute the pressure at the throat of the thruster to become the combustion chamber pressure p_{cc} of the state vector ***x***. In other words, the combustion-chamber pressure p_{cc} defined at the throat (as physically meaningful in the ODEs) is certainly considered as a state, since it is the main variable to control in order to adjust thrust, and it is measured at a given distance from the throat (p_{cc,meas}, small correction factor CF_{pcc,meas} needed from post-injection area). The inputs are considered as valve opening degrees in area (AV) since that is the quantity directly entering the ODEs and affecting the mass-flows evolution.

The mixture ratio MR is not a direct state because it represents a nonlinear function (ratio) of mass flows (states), which would even increase the already high nonlinearity of equations. Furthermore it tends to infinity or to 0 according to the different initial or final mass flow values. However, it also needs to be controlled to guarantee an accurate thrust level. This is accomplished by considering its commanded value in the reference generation described in the upcoming paragraphs.

As is seen in Fig. 1A, these ODEs can be first defined at a component level, depending on their resistive (lines, valves) or capacitive (combustion chamber) nature and then assembled according to the flow schematic to obtain a global system of ODEs. These component-based conservation equations can be mainly defined as follows (see MANFLETTI C., "Transient behaviour modelling of liquid rocket engine components", vol. PhD Thesis 2009 of "Berichte aus der Luft- und Raumfahrttechnik", Shaker Verlag, Aachen, 2010, OCLC: 685183465). Firstly, for capacitive elements, the continuity and energy conservation equations regarding their inputs and outputs are applicable: $V \frac{dρ}{dt} = {\dot{m}}_{in} - {\dot{m}}_{out}$ (1) $\frac{d}{dt} \left(\frac{pV}{γ - 1}\right) = \left({h}_{in}{\dot{m}}_{in}-{h}_{out}{\dot{m}}_{out}\right) + Φ$ (2) where V is the control volume, γ is the specific heat ratio, h is enthalpy and Φ is the heat transferred through the walls of the cavity (received or sent). Regarding resistive elements like valves or feedlines, the momentum-conservation equation is applicable: $\frac{d \dot{m}}{dt} = \frac{{p}_{in} - {p}_{out} - {k}_{res} \dot{m} \left|\dot{m}\right|}{I}$ (3)

Where kᵣₑₛ is the element's resistance and I is the element's fluidic inertia.

The global nonlinear state-space model of the engine is obtained by assembling these equations including the corresponding parameters. Here, it is aimed at achieving a global mathematical expression of the system as a whole, not just component-wise. Thus, the symbolic and causal interconnection of all component sub-models has been carried out. In other words, the equations described in the previous subsections have been associated according to cycle's flow schematic. The output quantities of every upstream component, in this case mainly feedlines and valves with tanks as boundary conditions, are fed to the inputs of every corresponding downstream component (combustion chamber).

In this manner, a global state-space expression ***ẋ*** *= f(**x, u, w**)* of the system, with the aforementioned inputs and outputs, can be obtained. It is worth noting, that all state-space models (ODEs, inputs and outputs) presented here are rendered non-dimensional in all quantities with respect to their values at the nominal OP (operating point) or reference point RP (pressures and mass flows in the center of the OP-box), or with respect to the maximum opening (areas). $\left.\left.\begin{matrix}{\dot{p}}_{cc} \\ {{m}^{¨}}_{fu} \\ {{m}^{¨}}_{ox}\end{matrix}\right]=f\left(\begin{matrix}{p}_{cc} \\ {\dot{m}}_{fu} \\ {\dot{m}}_{ox}\end{matrix}\right],\left.\begin{matrix}{A}_{VF} \\ {A}_{VO}\end{matrix}\right],\left.\begin{matrix}{p}_{TankF} \\ {p}_{TankO}\end{matrix}\right]\right)$ (4)

This resulting model is highly nonlinear and presents equations considerably burdensome to manipulate for synthesizing controllers via conventional nonlinear techniques, since its presents numerous high-order and coupled nonlinearities, with many interdependencies and varying terms. This complex model can be used as a simplified simulator (compared with the engine simulator, it is simpler due to the aforementioned simplifications). But for the control purposes of the present disclosure, it is of interest to keep simplifying it to linearize it and evaluate it at operating points, in order to apply state-of-the-art linear control methods.

According to the present disclosure, linearization is preferably performed using first-order Taylor series. In other words, this linearization, a first-order Taylor series, still remains symbolic, which enables the linear model to be usable all over the OP box; the numerical values related to the OP-equilibrium render it local in the end. The model becomes representative in the vicinity of each OP. This model has been cross-validated with the original accurate thermodynamic model and has been evaluated in its nonlinear form as representative enough, since it captures the adequate dynamic behavior (slopes), necessary for a meaningful control synthesis.

### MPC Controller 101

According to the present disclosure, there is provided a multivariable closed-loop controller 101 of the LPRE 100, the multivariable closed-loop controller 101 using the model for MPC according to the data structure as described above, wherein the model is linearized in the reference point to yield the linear equation ***ẋ*** *= **Ax** + **Bu,*** where ***A*** and ***B*** are matrices having stable poles to yield a controllable system, and the state vector ***x*** is reconstructed based on the output vector ***y.***

The Model Predictive Control (MPC) approach implemented has been used in industrial applications more and more frequently in the last decades since it can adapt to systems with complex model structures, such as this engine, and fulfil multiple demanding control goals. Hereinbelow, the present disclosure on the MPC algorithm or control law is presented.

This family of techniques is an optimization-based control approach, where the control law is recomputed at each time step k with the goal of minimizing a cost function. Basically, control inputs are computed according to the minimization of the cost while respecting the introduced dynamic and operating constraints along a discretized time horizon, in which the multivariable behavior of the system is predicted with models. Only the first computed control of the horizon, corresponding to the first time step, is factually applied to the plant, since at the next time step the whole process is repeated.

This method is finding many applications in the industry due to its advantages: it is applicable to complex systems and it can take into account multivariable tracking targets while allowing an online model adaptation to the current targeted operating point.

This method allows indeed, in contrast to the initially developed and tested proportional-integral (PI) controller synthesized by means of the same developed state-space model, the complete multivariable control system S with consideration of the different end control targets (chamber pressure p_{cc,ref} and mixture ratio MR_{ref}) via the two available control inputs (valve opening degrees A_{VF} and A_{VO}). The MPC controller 101 in this algorithm uses the a linearization of the developed non-linear state-space model (data structure 100M) of the control target 100 to calculate the appropriate control action by solving an optimization problem, constrained by the system dynamics (defined as state constraints) along the future predicted steps, as well as by other relevant system/actuator limitations. This allows the use of the controller 101 even in transient/dynamic phases, such as changing operating points/reference points. The linearized state-space model (data structure 100M) is evaluated around the commanded target point, thereby adjusting the intensity of the control action to the local regime (effect analogous to gain scheduling, but without incremental quantization).

At the same time, the maximum capabilities of the valve actuators, such as opening bounds and speeds, can be directly taken into account in the control law by setting the corresponding constraints on the calculated action.

According to the present disclosure, linearization and control operation (of the closed-loop control system S) preferably is performed in real-time, e.g. by being iterated discretely once per predetermined time period (e.g. 50 ms).

In other words, the MPC problem is initially posed in continuous time. However, in order to solve it numerically via an interior-point scheme (inherently respecting constraints), it is discretized via zero-order hold e.g. at Δt = 50 ms (control update frequency of e.g. 20 Hz according to measurements at the same or higher frequency), limited by the available controller computational load and by actuators' response capabilities. An operating/reference-point change is performed here by tracking a new desired equilibrium (***yᵣ**, **xᵣ**, **uᵣ***), without specifying a reference trajectory. Thus, the linear dynamic constraints are defined in the algorithm as: $Δ {x}_{k + 1} = {A}_{d} \left({x}_{r}, {u}_{r}\right) Δ {x}_{k} + {B}_{d} \left({x}_{r}, {u}_{r}\right) Δ {u}_{k}$ (5) where ***A_{d}*** and ***B_{d}*** are the zero-hold-discretized state-space matrices, resulting from the linearization of the simplified continuous-time nonlinear system about the pre-computed reference vectors in states, control inputs *(**xᵣ**, **uᵣ**)* and the non-controllable vector ***w*** having 2 time-dependent, non-controllable variables being fuel tank pressure p_{TankF} and oxidizer tank pressure p_{TankO} (see feed-forward paragraph below). The matrix ***A_{d}***, whose discretization is performed here e.g. via the Tustin approximation, is stable for all the physically feasible ***xᵣ***, which is a particularity of standard LPREs. The ***C_{d}*** matrix approach, core item in the (Kalman) filter 103 definition, is described hereinbelow in detail. It expresses: $Δ {y}_{k} = {C}_{d} \left({y}_{m , r}, {x}_{r}\right) Δ {x}_{k}$ (6)

A possible disadvantage of MPC with respect to more conventional control methods is the increase in computing resources required to solve the underlying optimization problem online. This was an important design criterion during the implementation of the present disclosure: the closed-loop (CL) control system S shall remain operational in real time with this advanced control method. With these goals and criteria, an MPC controller 101 has been constructed by introducing the developed state-space model into the adaptive MPC block e.g. of the MATLAB-Simulink^{®} MPC toolbox.

With respect to the aforementioned multivariable control objectives (chamber pressure p_{cc} and mass flows ṁ_{fu} and ṁₒₓ - as a function of MR), the controller 101 of the present disclosure is able to track three variables (combustion chamber pressure p_{cc}, fuel mass flow ṁ_{fu} and oxidizer mass flow ṁₒₓ) with the two available control inputs (fuel throttle valve opening degree A_{VF} and oxidizer throttle valve opening degree A_{VO}). The tracking targets have been adapted in connection with the measurable outputs and thus with the implemented estimation strategy, described herein below.

### (Kalman) Filter 103

According to the present disclosure, there is provided a filter 103 for use in multivariable closed-loop control of the LPRE 100. The filter 103 has a linear filter function that uses the non-linear model for MPC according to the above-described data structure 100M. The non-linear model is linearized in the reference point to yield the linear equation ***x_{KF}** = **C⁻¹** · **y***, where ***C*** is a system observation matrix so as to reconstruct the state vector ***x_{KF}*** from the output vector ***y**.* The filter 103 preferably is a linear Kalman filter 103.

A dynamic estimator/observer (=filter 103) based on injector-head delta-pressure to mass-flow correlations has been synthesized to close the loop with the measurable outputs (combustion-chamber pressure p_{cc,meas}, injection pressures p_{injF}, p_{injO} and optionally temperatures T_{injF}, T_{injO}). Specifically, a standard Kalman Filter (KF) can be adapted to become the filter 103, assembled by linearizing the output measurement model (data structure 100M) (injector correlation) as a function of the state vector ***x*** (chamber pressure p_{cc} and mass flows ṁ_{fu} and ṁₒₓ). Kalman Filters are a well-established estimation method (see KALMAN, R.E.; BUCY, R.S., "New Results in Linear Filtering and Prediction Theory", 1961, Journal of Basic Engineering. 83, pp. 95-108) that merges measurements and physical model information on a system and provides a balanced estimated output depending on the reliability of each provided input.

The KF 103 provides a balance between the real measurements (possibly noisy, biased) and the theoretical model (linear state-space model). This filter is also adaptable to the present disclosure, as the state-space model is the same that the MPC receives at each time step. The filter 103, synthesized based e.g. on the MATLAB-Simulink^{®} Control System toolbox (standard Kalman Filter block), provides the MPC controller with the estimated state as a function of measured pressures p_{injF}, p_{injO} and temperatures T_{injF}, T_{injO} by considering disturbance and sensor noise models, thereby eliminating the need for direct, static mass-flow estimates ṁ_{fu}, ṁₒₓ e.g. via polynomials. This reconstruction/estimation concept leads to redefining the tracking targets in terms of chamber pressure and both injection pressures, instead of mass flows. The injection pressures are in fact the directly measured quantities that are to determine the commanded MR. The possible direct error in this correlation lies in the target-value definition for the injection pressures as a function of the commanded MR, which may have a certain dispersion from engine to engine, but could be determined in advance with detailed characterizations.

Those correlations are assumed to define the measurement model as a function of the state ***y** = g(**x**).* Since these expressions are highly nonlinear and actually present a dependency of the form ***x** = g(**y**)* (mass flows ṁ_{fu}, ṁₒₓ as a function of the measured injection pressures p_{injF}, p_{injO} and optionally temperatures T_{injF}, T_{injO}), in the approach of the present disclosure they are linearized and simplified as follows to obtain the linear expression ***y** = **C** · **x**.*

Concretely, starting from the correlation $\dot{m} = f \left({p}_{in}, {p}_{out}, {T}_{inj}\right) ≡ {f}_{NL} \left({p}_{inf}, {p}_{cc}, {T}_{inj}\right) ≡ {f}_{NL} \left({y}_{m}\right) ,$ defining: $h \left(x, {y}_{m}\right) = {\dot{m}}_{r} - {f}_{NL} \left({y}_{m}\right) = 0 ,$ and linearizing each *h(**x**, **yₘ**)* (for fuel and for oxidizer) about a pre-computed operating/reference point *(**xᵣ**, **yᵣ**)*, the following linear relationship can be obtained: $\begin{matrix}\to Δ \dot{m} - \left({\left.\frac{\partial {f}_{NL} \left({y}_{m}\right)}{\partial {p}_{cc}}\right|}_{\left({x}_{r}, {y}_{r}\right)}\right) ⋅ Δ {p}_{cc} - \left({\left.\frac{\partial {f}_{NL} \left({y}_{m}\right)}{\partial {p}_{inj}}\right|}_{\left({x}_{r}, {y}_{r}\right)}\right) ⋅ Δ {p}_{inj} \\ - \left({\left.\frac{\partial {f}_{NL} \left({y}_{m}\right)}{\partial {T}_{inj}}\right|}_{\left({x}_{r}, {y}_{r}\right)}\right) ⋅ Δ {T}_{inj} = 0 .\end{matrix}$

By considering the ΔTᵢₙⱼ as nearly constant (the linearization with regard to Tᵢₙⱼ is in any case too simplified and ill-defined), and hence suppressing it from the formal output ***y*** vector (the full measurement vector ***yₘ*** includes ***y*** and both Tᵢₙⱼ) the expression simplifies to: $\to Δ {p}_{inj} - \frac{1}{{\left.\frac{\partial {f}_{NL} \left({y}_{m}\right)}{\partial {p}_{inf}}\right|}_{\left({x}_{r}, {y}_{r}\right)}} \left(Δ\dot{m}-\left({\left.\frac{\partial {f}_{NL} \left({y}_{m}\right)}{\partial {p}_{cc}}\right|}_{\left({x}_{r}, {y}_{r}\right)}\right)⋅{Δp}_{cc}\right)$ (7)

This expression completes the definition of the ***C*** matrix components, which establishes the relationship ***y** = **C** · **x*** between the output variables ***y** =* [p_{cc,meas}, p_{injF}, p_{injO}]^{T} and the state ***x** =* [p_{cc}, ṁ_{fu}, ṁₒₓ]^{T}, where the measured Tᵢₙⱼ (included in ***yₘ***) are also injected at each time step for a higher accuracy (only to compute the linearized coefficients relative to pᵢₙⱼ and p_{cc}, Tᵢₙⱼ, not formally considered in ***y*** output vector): $C ≡ {C}_{d} = \left[\begin{matrix}{c}_{11} & 0 & 0 \\ {c}_{21} & {c}_{22} & 0 \\ {c}_{31} & 0 & {c}_{33}\end{matrix}\right] .$

This system observation ***C*** matrix definition allows to define a linear Kalman Filter 103, which is the structure that suits the real-time requirement in this algorithm. The MPC controller block 101 e.g. by MATLAB-Simulink^{®} expects per default that this state vector ***x*** is augmented with disturbance-model states, in order to consider the effects of measurement noise, external disturbance and indirectly of modelling error in the model-based prediction. This resides in a standard robust approach to reject unmeasured output disturbance and in the end contributes to reduce the estimation error and hence the overall controller tracking error. The state-vector augmentation and noise considerations are implemented e.g. according to the MATLAB-Simulink^{®} documentation. The disturbance model added to each of the three outputs measured (and considered in the output vector ***y***) is currently assumed as integrated white noise, which can be defined as a discrete-time integrator with a dimensionless unitary gain (as a function of the discretization time step).

According to the present disclosure, the filter 103 preferably is further configured to receive, as input, an extended output vector ***yₘ*** having the i) measured combustion chamber pressure p_{cc,meas}, ii) the fuel injection pressure p_{injF}, iii) the oxidizer injection pressure p_{injO}, iv) a fuel injection temperature T_{injF} and v) an oxidizer injection temperature T_{injO}, and a non-controllable vector ***w*** having 2 time-dependent, non-controllable variables affecting the extended output vector ***yₘ***, being fuel tank pressure p_{TankF} and oxidizer tank pressure p_{TankO}.

As depicted below in the chapter "simulation results", this filter 103 achieves sensor noise and offset rejections, as well as actuator-parameters variations.

### Input and output reference definition (Feed-forward block) 102

According to the present disclosure, there is provided the closed-loop control system S comprising the multivariable closed-loop controller 101 as described above, configured to control the LPRE 100 as a control target, and the filter 103, as described above, in a feedback loop from the multivariable closed-loop controller 101. Moreover, the closed-loop control system S preferably further comprises the FF component 102 in an open-loop portion of the system S. The FF component 102 preferably is configured to receive, as input, high-level reference values being i) the reference mixture ratio MR_{ref} of fuel and oxidizer and ii) the reference combustion chamber pressure p_{cc,ref}, and output, based on the input, a reference vector ***yᵣ*** comprising i) the reference combustion chamber pressure p_{cc,ref}, ii) a reference fuel injection pressure p_{injF,ref} and iii) a reference oxidizer injection pressure p_{injO,ref}, wherein a difference between the reference vector ***yᵣ*** as a target vector and the output vector ***y*** as an actual vector yields an error vector ***yₑᵣᵣ*** to be input into the multivariable closed-loop controller 101.

In other words, this approach with a state estimator based on injection pressures p_{injF}, p_{injO} and temperatures T_{injF}, T_{injO} logically requires to define a target reference vector *(**yᵣ**)* to track in terms of these measured quantities. The MPC controller 101 receives this reference as an input and steers the system so that the measurements correspond to the reference/target. Hence, the definition of this reference is a key element in the final accuracy obtained.

According to the present disclosure, the FF component 102 preferably is further configured to output, based on the input, at least one additional reference value of iv) a reference fuel mass flow ṁ_{fu,ref}, v) a reference oxidizer mass flow ṁ_{ox,ref}, vi) a reference fuel throttle valve opening degree A_{VF,ref} and vii) a reference oxidizer throttle valve opening degree A_{VO,ref}, and provide the reference vector ***yᵣ*** and the at least one additional reference value to the multivariable closed-loop controller 101 and the filter 103 so as to enable linearization at the reference point.

In other words, this OL reference definition, included in the feed-forward block 102 in the OL portion of the closed-loop control system S ("to the left of the loop" in Figs. 2 and 2A), consists of several computation steps. First of all, the control loop (i.e., the MEC 101, 102, 103) receives, as a main input from the higher level instance 10, the reference in terms of combustion-chamber pressure p_{cc,ref} (or thrust) and in its associated mixture ratio MR_{ref}. With both of these values, the reference mass flows ṁ_{fu,ref} and ṁ_{ox,ref} can be determined in the OL FF block 102 e.g. by means of look-up-table (LUT) correlations, based on the characteristics of the combustion chamber and feed system.

Said LUT may reside in a tailored multidimensional look-up table defined for many multivariable combinations and anchored to real test data. The data used for this table cover e.g. over 7000 combinations of the engine variables determining the required valve opening degrees A_{VF,ref}, A_{VO,ref} (in nominal conditions: target chamber pressure p_{cc,ref} and MR_{ref}, tank pressures p_{TankF}, p_{TankO}, corresponding mass flows ṁ_{fu,ref}, ṁ_{ox,ref}).

These combinations cover the complete operating domain of the engine at several tank pressures p_{TankF}, p_{TankO}. In order to interpolate through this multi-column table, the following correlations are used.

The initial input to the OL selector (=FF component 102) is obviously the target p_{cc,ref} and MR_{ref}, together with the current tank pressures ***w* =** [p_{TankF}, p_{TankO}]^{T}.

Mass-flow targets ṁ_{fu,ref}, ṁ_{ox,ref} preferably are computed first by means of a nonlinear correlation (e.g. scattered interpolant) to the target operating/reference point in pressure and mixture ratio, to which they are completely and uniquely dependent. Specifically, the fuel mass flow ṁ_{fu,ref} is correlated to both targets p_{cc,ref} and MR_{ref} and the oxidizer mass flow ṁ_{ox.ref} is fixed as per target ratio MR_{ref}. As described above, mass flow targets are used within the MPC controller 101 for model linearization (***xᵣ*** vector). ${\dot{m}}_{fu , ref} = {f}_{1} \left({p}_{cc , ref}, {MR}_{ref}\right) ;$ ${\dot{m}}_{ox , ref} = {MR}_{ref} ⋅ {\dot{m}}_{fu , ref} .$

In a second step, both valve positions (A_{VF,ref} and A_{VO,ref}) are interpolated via the following independent correlations (e.g. scattered interpolants), which have proven to be optimal for the corresponding data sets: ${A}_{VF , ref} = {f}_{2} \left({p}_{cc , ref}, {p}_{tankF}, {MR}_{ref}\right) ;$ ${A}_{VO , ref} = {f}_{3} \left({p}_{cc , ref}, {p}_{TankO}, {\dot{m}}_{ox , ref}\right) .$

The functions f₁, f₂ and f₃ are currently scattered interpolants. They are preferably built via Delaunay triangulation and are e.g. stored in independent data structures.

In other words, this OL reference calculator (=FF component 102) also uses these values in a third step to generate a reference for the measurement ***yₘ*** vector (including injection temperatures T_{injF}, T_{injO}). The generation principle is based on a least-squares optimization method, which tries to minimize the error related to the indicated mass flows by varying the injector pressures and temperatures. The same correlation between mass flows and injection quantities is used for this computation, which mathematically means: $h \left({x}_{r}, {y}_{m , r}\right) = {\dot{m}}_{r} - {f}_{NL} \left({y}_{m , r}\right) = 0 \to get {y}_{m , r} to minimize h$

A nonlinear least-squares is solved on-the-fly for each set point introduced in the system S. The initial conditions and boundaries of ***y_{m,r}***, have a major impact on the computed result. Thus, they have been carefully adapted to cover the operating box of the engine. The chamber pressure values are always fixed to the target input and the injection-quantities targets are also adapted according to the target mixture ratio and hence to the mass flows. The engine injectors' characteristics are logically included in this calculation process. Therefore, the so-called knowledge error on the correlation's parameters has an impact on the references to be tracked, even if an offset correction has been performed for the different configurations (simulation or test).

### Real-time exportability

The MATLAB-Simulink^{®} toolboxes described above employed in this closed-loop control system S allow automatic C/C++ code generation e.g. out of Simulink^{®} diagrams. These features have been used in order to obtain a real-time executable software function of the closed-loop control system S, which can be imported into real-time software environments used in rocket-engine test benches. The internal tuning of each of the blocks 101, 102, 103, the main ones being Adaptive MPC 101 and (standard) Kalman Filter 103, has been selected in such a way that the exported algorithm can still be executed in real time with a maximum running computational load of 20% in the processor.

Specifically, the prediction horizons in states and control are limited to empirical performance-effort trade-offs and maximum iterations and tolerances are also optimized. Moreover, in case of no convergence of the MPC controller at a certain step (e.g. max. iterations/infeasibility achieved), it is enabled to use a suboptimal solution, in order not to keep the controls constant/saturated. Even suboptimal solutions are still on the correct system-excitation trajectory to find the optimal control action in the subsequent time step(s) and in this way, the computational load does not cumu-late delays.

### Optimal tuning

The optimal tuning of the Kalman Filter 103 and MPC controller 101 parameters (e.g. gain/weight matrices, process and measurement noise matrices) can be performed offline after a large series of simulations with the goal of minimizing a criterion in a particular application, in this case defined as the mean static error in chamber pressure and mixture ratio over a typical test sequence. Several optimization methods can be applied to minimize this criterion, for instance kriging-based techniques.

Moreover, several series of simulations can be selected as target conditions. More weight can be put on performance in nominal conditions (performance-oriented) or on robustness in degraded scenarios (robustness-oriented). A final fine tuning has been performed according to these goals and to the mathematical logic behind the controller and the estimator: the more representative flight conditions involving a realistic sensor-biased scenario have been targeted in a robustness-oriented approach. For this sake, a slightly higher MPC weight is put on chamber-pressure tracking (very slight difference since it is the main contributor to thrust, but MR-tracking is more sensitive to sensor bias) and a higher credibility is set on the model in comparison with the measurements, since flight-like sensors can present large offsets (assumed as ±200 mbar) and varying noise, implying the need for a more intense correction according to model expectations.

### Simulation results

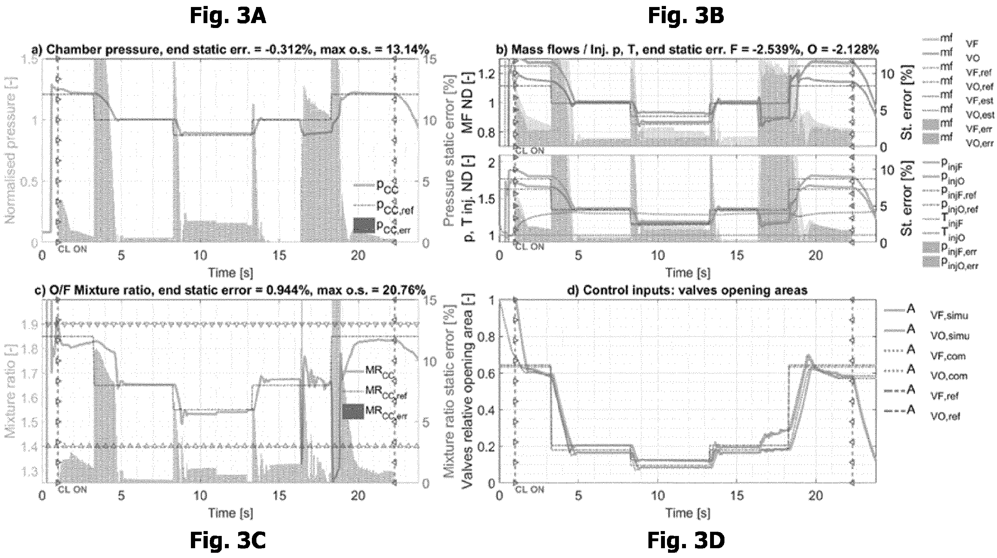

Herein below, Figs. 3 to 6 show measurement protocols attainable via the multivariable closed-loop controller in a closed-loop control system according to the present disclosure. Respective Figs. 3-6A (upper left) show a diagram of the combustion chamber pressure p_{cc}, respective Figs. 3-6B (upper right) show a diagram of the mass flows (fuel mass flow ṁ_{fu} and oxidizer mass flow ṁₒₓ) and the injection pressures (fuel injection pressure p_{injF} and oxidizer pressure p_{injO}), respective Figs. 3-6C (lower left) show the oxidizer/fuel mixture ratio MR and respective Figs. 3-6D (lower right) show the control inputs (control vector ***u***) being the fuel throttle valve opening degree A_{VF} and the oxidizer throttle valve opening degree A_{VO}, wherein all quantities are normalized with respect to the main reference point (so-called nominal center of OP-box).

### Simulation results - performance

Several simulation cases have been selected in order to study the performance (and later robustness) of the controller.

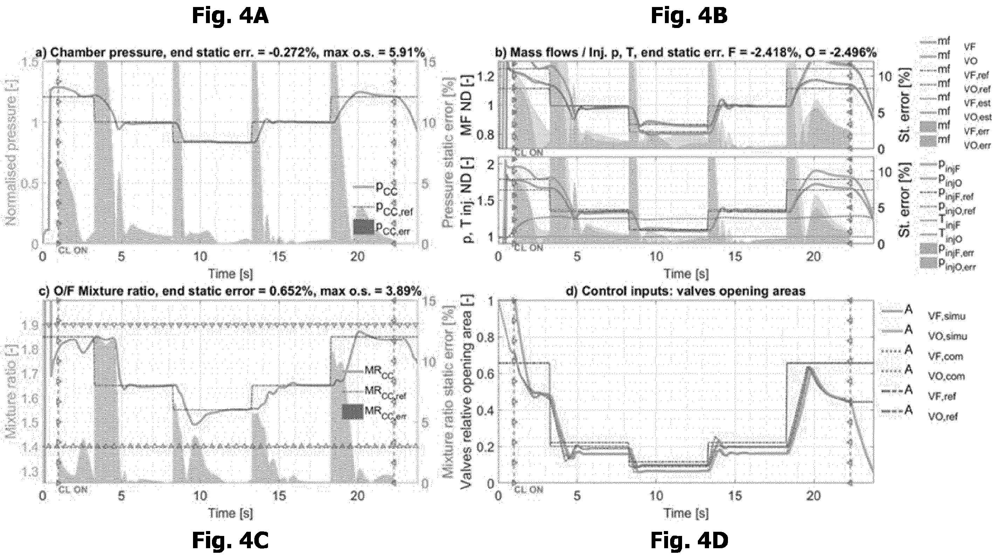

First, performance results in nominal conditions are determined, that is to say, without sensor noise/offsets or actuator-parameters variations. Simulation results in terms of static errors in pressure and mixture ratio (with respect to their references) are very satisfactorily below 0.65% in pressure and MR at the end of all steps of a benchmark sequence with OP-changes in different directions. The results shown in Figs. 3 and 4 have been simulated with an SPE-T (such as a pressure-fed, storable-propellants, throttleable space-propulsion engine) multi-physical SMART simulator and the neural-network model of the studied engine (as a digital twin), respectively.

Figs. 3A to 3D show measurement protocols attainable via the multivariable closed-loop controller in a closed-loop control system according to the present disclosure. In detail, Fig. 3 shows performance-oriented controller 101 + filter 103 (MPC+KF) results at 20 Hz on the SPE-T multi-physical SMART simulator at a typical throttling sequence in step changes, with by-pass action between 16 and 18.5 s (extreme non-modelled perturbation).

In turn, Figs. 4A to 4D show further measurement protocols attainable via the multivariable closed-loop controller in a closed-loop control system according to the present disclosure. In detail, Fig. 4 shows controller 101 + filter 103 (MPC+KF) results with neural network model, at a typical throttling sequence in step changes, no sensor error, performance-oriented.

In this enhanced approach, the chamber pressure p_{cc} and injection pressures p_{injF}, p_{injO} are tracked instead of only the estimated mass flows ṁ_{fu,ref}, ṁ_{ox,ref}, leading in the end to a more accurate multivariable control with regard to the control goals. It can be observed on the top right plot (Fig. 4B), where the mass flows ṁ_{fu,ref}, ṁ_{ox,ref} and injection quantities are compared, that the injection pressures p_{injF}, p_{injO} are a representative quantity to track mass-flow references, since they follow their variations. On the other hand, injection temperatures T_{injF}, T_{injO} remain relatively constant after the start-up throughout the sequence. That supports the design decision to remove them from the output vector ***y*** to perform tracking and estimation on.

While simulating the loop with the more accurate SMART model, results also meet requirements at the end of each OP step change (Fig. 3), confirming its applicability prior to hot-firing tests. The observable bypass effect (between ca. 16-18.5 s in the drawings) was introduced in the real test sequence in order to mimic a loss of interface pressure on the line, e.g. by feeding a second engine. It may be currently not under the scope of the modelling representativeness of the nonlinear state-space model of the data structure 100M of the present disclosure (it would require additional control inputs affecting terms/parameters in the ODEs) and hence it cannot be as well rejected by the controller, especially in the achievable chamber pressure p_{cc}.

### Simulation results - robustness

Analogous results are obtained if ramp commands are sent. If a robustness-oriented tuning is applied, as in this chapter, a little drop in performance results (in nominal conditions) must be expected in exchange: <1% error in MR although similar errors in chamber pressure.

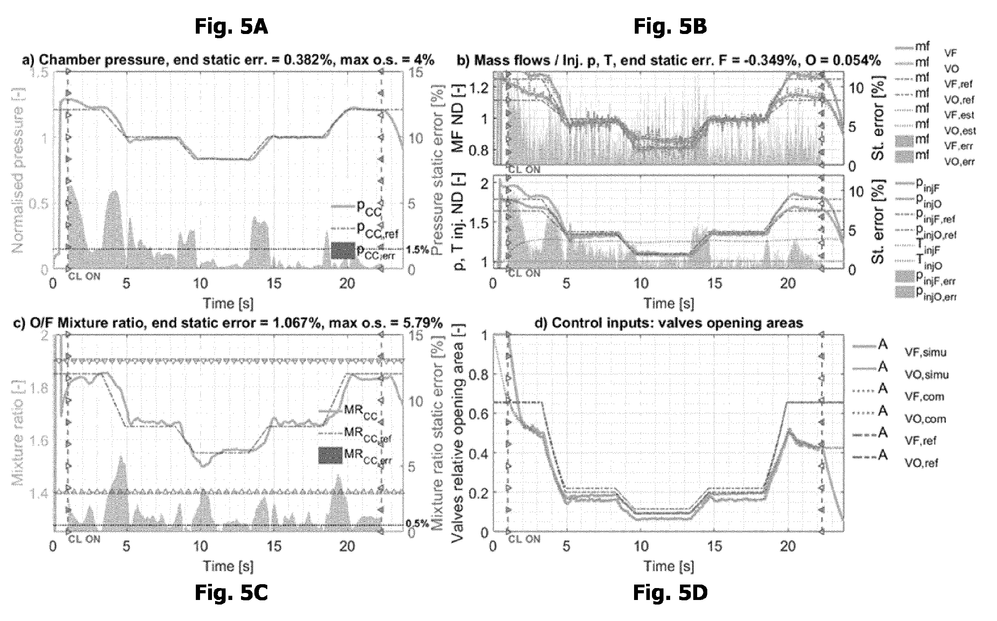

Figs. 5A to 5D show further measurement protocols attainable via the multivariable closed-loop controller in a closed-loop control system according to the present disclosure. In detail, Fig. 5 shows controller 101 + filter 103 (MPC+KF) results with neural-network model, at a typical throttling sequence in ramp changes, white noise reading error about 0 with test-based σ (p_{cc} and MR results depicted are the simulated undisturbed outputs, mass flows (MFs) ṁ_{fu,ref}, ṁ_{ox,ref} are computed via the static correlation and disturbed), robustness-oriented.

To test robustness, a sensor noise scenario can be simulated by considering a white noise with standard deviations computed from test results (σ_pC = 200 mbar, σ_pinj = 80 mbar, σ_Tinj = 0.15 K), depicted in Fig. 5 with ramp changes.

Results are also satisfactory within the specifications even in the presence of a typical white noise found at the test bench.

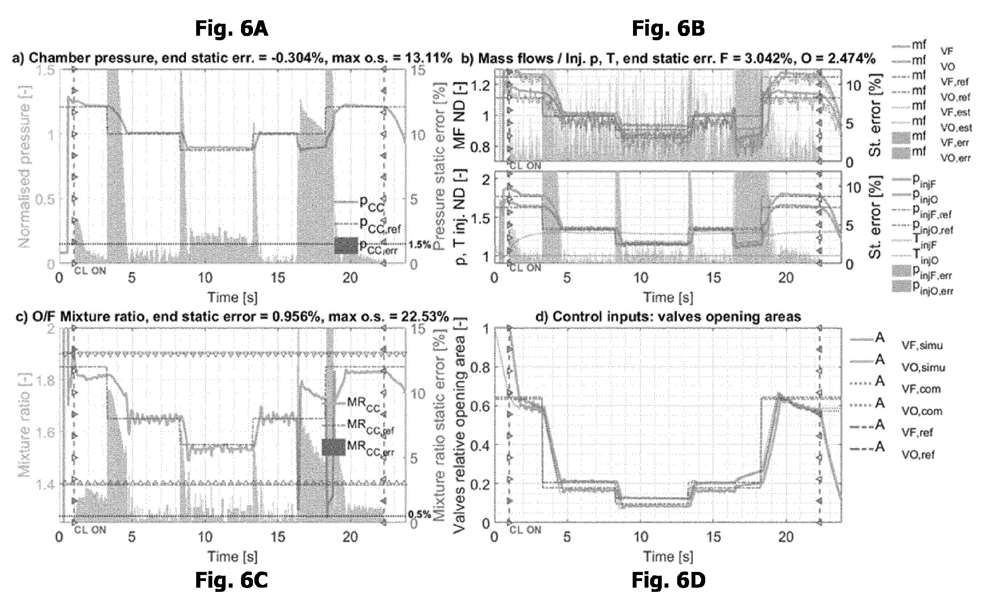

Figs. 6A to 6D show further measurement protocols attainable via the multivariable closed-loop controller in a closed-loop control system according to the present disclosure. In detail, Fig. 6 shows controller 101 + filter 103 (MPC+KF) results with multi-physical SMART model, at a typical throttling sequence in step changes, test-based white noise and worst-case constant maximum thermal drift in p-sensors (400-mbar smaller deltas) (p_{cc} and MR results depicted are the simulated undisturbed outputs, mass flows (MFs) ṁ_{fu,ref}, ṁ_{ox,ref} are computed via the static correlation and disturbed), robustness-oriented.

Additionally to this white noise, a worst-case thermal-related drift (±200 mbar) has been artificially introduced on the pressure sensors, in such a way that the maximum offset in the delta pressures between the chamber and the injector head is obtained (400 mbar smaller or greater). Even in this case, the robustness-oriented tuning achieves pressure tracking within the specifications and MR tracking below 1% static error (Fig. 6, smaller delta p).

The effect of the robust choice is evident when simulating the performance-oriented tuning, with which MR errors rise to 5-10%. A constant 400-mbar greater delta p offset leads to errors of 1-1.5% in MR. A variable thermal-drift offset, for instance introduced as independent uniform distributions on each sensor (between -200 mbar and +200 mbar) can also be rejected, at better performance than the constant offsets (thus constant offsets are taken as worst case).

Hence, the robustness-oriented configuration could be preferred for flight. The KF together with the robust MPC algorithm are able to reject the simulated disturbances, with the exception of a major worst case in which delta pressures' offsets are very different (>200 mbar) between both propellant lines. In that case, static errors in MR can increase up to 5%, while pressure errors stay within the requirements.

### Technology Readiness Level (TRL)

TRL 5 of the complete engine system S including the controller 101 (without the FF component 102 and filter 103) was achieved with the simplified control method (PI) in the framework of a SPE-T test campaign, where the controller 101, embedded in an emulator environment was given progressive responsibility during several hot fir-ings and accomplished the stabilization and setting of the system.

The TRL of the MEC (comprising the controller 101, the FF component 102 and the filter 103) in standalone is consequently about 5, since it has been validated in front of a high-fidelity multi-physical engine simulator with disturbances.

### Potential constraints

If the measurements provided by sensor configuration differ too much (far above 200 mbar/20 K offset) from the real state of the engine, the KF estimator 103 will present higher errors and the controller 101 will shift the system to correspond those wrong measurements, not achieving the specified tracking accuracies (1.5% in pressure/thrust and 0.5% in mixture ratio). The KF 103 is designed to balance the measurements with modelled expectations but not in unlimitedly degraded conditions.

A sensor-offset worst-case based on test experience of ±200 mbar in each pressure sensor (possible thermal drift in chamber and injector head, in opposite directions adding up to ±400 mbar error in delta pressure) plus a simultaneous noise excitation (test-related uniform or white-noise distributions) are relatively rejectable (errors < 1-1.5%) as demonstrated per simulation with a robust tuning of the controller 101 and estimator 103. However, if the offset is too different between both propellant lines (> 200 mbar), accuracy requirements in MR may not be met.

### Potential alternatives

There are currently not many alternative control methods for this type of complex systems S:
a) PID-based control methods have also been developed in the framework of this development. They are a simple and effective alternative (present in literature), but not all control goals can be attained since the method cannot adapt to the multivariable nature of the modelled system (3 outputs to be controlled via 2 inputs, as described above). Results may be acceptable, but lower accuracies and robustness are achieved.
b) The current trend in the literature is to develop Machine Learning- (ML) -based solutions by means of comprehensive data sets of engine simulations and test campaigns combined. Reinforcement Learning (RL) is a ML method currently used at German Aerospace Centre (DLR) Lampoldshausen (see DRESIA, Kai, et al., "Rocket Engine Control with Neural Networks: Experimental Results of the LUMEN Turbopump Test Campaign", loc. cit.) for several types of engines, also the same one studied here. The present inventor compared the MPC controller 101 (together with filter 103 and optional FF component 102) of the present disclosure with RL solutions. Results may point to better performance of RL in nominal conditions, but better robustness of the physics-based MPC controller of the present disclosure in degraded scenarios (e.g. sensor noise, actuator parameter variations, modelling error) was obtained.

Regarding the mass-flow estimation method, there are more alternatives. The currently selected approach via a standard Kalman Filter 103 is not the only one and may not even be the most accurate one, but it was the best method found to still function in real-time with a reasonable computational budget. More complex Kalman Filters, such as EKF (Extended KF), optimization-based estimators or ML-based estimation approaches would also be theoretically feasible for this system. Further sensor processing blocks to eliminate too large offsets according to testing experience could also be studied.

There may be possible alternatives for the LUT correlations of the FF component 102. Different correlations and variables associations may also be possible, maybe simplifying or complexifying the computation, that must also remain in real time.

If sensor offsets do not allow an accurate estimation and control of mixture ratio, an alternative loop with a mono-variable/SISO (single-input single-output) MPC controller 101 has also been implemented and simulated. In this alternative closed-loop control system S, combustion chamber pressure p_{cc} is controlled in CL via the oxidizer valve (input A_{VO}) via an analogous MPC controller 101 and the fuel valve (input A_{VF}) is adjusted in OL according to the pre-defined OL reference look-up table to correct mixture ratio (according to ideal expectations). Low accuracies in O/F ratio may be per se expected with this method, but combustion chamber pressure p_{cc} can be precisely regulated by means of the mono-variable MPC in CL.

### Potential infringement

A potential infringer could replicate the use of the described selected combinations of control and estimation methods and sensors applied to their similar or different rocket-engine cycle. For doing so, they would need first to synthesize an appropriate state-space model of the engine, for which there can be several approaches: from 0-D equations like in the present disclosure or from system identification techniques.

It is believed that the advantages of the technique presented herein will be fully understood from the foregoing description, and it will be apparent that various changes may be made in the form, constructions and arrangement of the exemplary aspects thereof without departing from the scope of the present disclosure or without sacrificing all of its advantageous effects. Because the technique presented herein can be varied in many ways, it will be recognized that the present disclosure should be limited only by the scope of the claims that follow.

## Claims

1. A data structure (100M) for use in a multivariable closed-loop control of a liquid-propellant rocket engine, LPRE (100), the data structure defining a non-linear model for model predictive control, MPC, the non-linear model being linearizable at least in a reference point in the operating range of the LPRE and the data structure comprising:
a state vector ***x*** having 3 state variables being i) a combustion chamber pressure p_{cc}, ii) a fuel mass flow ṁ_{fu} and iii) an oxidizer mass flow ṁₒₓ;
a control vector ***u*** having 2 controllable inputs being i) a fuel throttle valve opening degree A_{VF} and ii) an oxidizer throttle valve opening degree A_{VO}; and
an output vector ***y*** having 3 measured variables being i) a measured combustion chamber pressure p_{cc,meas}, ii) a fuel injection pressure p_{injF} and iii) an oxidizer injection pressure p_{injO}, wherein:
the model is linearizable in the reference point to yield a linear system of equations.

2. The data structure of claim 1, wherein
the data structure further comprises:
a non-controllable vector ***w*** having 2 time-dependent, non-controllable variables affecting the output vector ***y***, being fuel tank pressure p_{TankF} and oxidizer tank pressure p_{TankO}.

3. A filter (103) for use in a multivariable closed-loop control of a liquid-propellant rocket engine, LPRE (100), the filter having a linear filter function that uses the non-linear model for model predictive control, MPC, according to the data structure (100M) of claim 1 or 2, wherein:
the non-linear model is linearized in the reference point to yield the linear equation ***x_{KF}** = **C⁻¹** · **y**,* where ***C*** is a system observation matrix so as to reconstruct the state vector ***x_{KF}*** from the output vector ***y.***

4. The filter of claim 3, being a linear Kalman filter.

5. The filter of claim 3 or 4, wherein:
the combustion chamber pressure p_{cc,meas}, the fuel injection pressure p_{injF} and the oxidizer injection pressure p_{injO} are values measured by at least one sensor, and
the fuel mass flow ṁ_{fu} and the oxidizer mass flow ṁₒₓ are reconstructed based on the measured combustion chamber pressure p_{cc,meas}, the fuel injection pressure p_{injF} and the oxidizer injection pressure p_{injO} without involvement of any dedicated mass flow sensor.

6. The filter of any of one of claims 3 to 5, further configured to:
- receive, as input, an extended output vector ***yₘ*** having the i) measured combustion chamber pressure p_{cc,meas}, ii) the fuel injection pressure p_{injF}, iii) the oxidizer injection pressure p_{injO}, iv) a fuel injection temperature T_{injF} and v) an oxidizer injection temperature T_{injO}, and a non-controllable vector ***w*** having 2 time-dependent, non-controllable variables affecting the extended output vector ***yₘ***, being fuel tank pressure p_{TankF} and oxidizer tank pressure p_{TankO}.

7. A multivariable closed-loop controller (101) of a liquid-propellant rocket engine, LPRE (100), the multivariable closed-loop controller using the non-linear model for model predictive control, MPC, according to the data structure (100M) of claim 1 or 2,
wherein the model is linearized in the reference point to yield the linear equation ***ẋ*** *= **Ax + Bu,*** where ***A*** and ***B*** are matrices having stable poles to yield a controllable system, and
the state vector ***x*** is reconstructed based on the output vector ***y.***

8. The multivariable closed-loop controller of claim 7, wherein:
the multivariable closed-loop controller receives input from at least one sensor to measure the combustion chamber pressure p_{cc,meas}, the fuel injection pressure p_{injF} and the oxidizer injection pressure p_{injO}, and
the multivariable closed-loop controller does not receive input from any mass flow sensor so that the fuel mass flow ṁ_{fu} and the oxidizer mass flow ṁₒₓ are reconstructed based on the measured combustion chamber pressure p_{cc,meas}, the fuel injection pressure p_{injF} and the oxidizer injection pressure p_{injO}.

9. The multivariable closed-loop controller of claim 8, wherein:
the measured combustion chamber pressure p_{cc,meas} is measured directly after injection into a thruster of the LPRE and is then corrected by a correction factor CF_{pcc,meas} to compute the pressure at the throat of the thruster to become the combustion chamber pressure p_{cc} of the state vector ***x*.**

10. A closed-loop control system (S) comprising:
the multivariable closed-loop controller (101) of any one of claims 7 to 9 configured to control the LPRE as a control target; and
the filter (103) of any one of claims 3 to 6 in a feedback loop from the multivariable closed-loop controller.

11. The closed-loop control system of claim 10, wherein:
linearization and control operation is performed in real-time.

12. The closed-loop control system of claim 11, wherein:
linearization and control operation is iterated discretely once per predetermined time period.

13. The closed-loop control system of claim 12, wherein the time period is 50 ms.

14. The closed-loop control system of any one of claims 10 to 13, further comprising:
a feed-forward, FF, component (102) in an open-loop portion of the system, wherein the FF component is configured to:
- receive, as input, high-level reference values being i) a reference mixture ratio MR_{ref} of fuel and oxidizer and ii) a reference combustion chamber pressure p_{cc,ref}, and
- output, based on the input, a reference vector ***yᵣ*** comprising i) the reference combustion chamber pressure p_{cc,ref}, ii) a reference fuel injection pressure p_{injF,ref} and iii) a reference oxidizer injection pressure p_{injO,ref},
wherein a difference between the reference vector ***yᵣ*** as a target vector and the output vector ***y*** as an actual vector yields an error vector ***yₑᵣᵣ*** to be input into the multivariable closed-loop controller.

15. The closed-loop control system of claim 14, wherein the FF component is further configured to:
- output, based on the input, at least one additional reference value of iv) a reference fuel mass flow ṁ_{fu,ref}, v) a reference oxidizer mass flow ṁ_{ox,ref}, vi) a reference fuel throttle valve opening degree A_{VF,ref} and vii) a reference oxidizer throttle valve opening degree A_{VO,ref}, and
- provide the reference vector ***yᵣ*** and the at least one additional reference value to the multivariable closed-loop controller and the filter so as to enable linearization at the reference point.

## Amended claims

### Amended claims in accordance with Rule 137(2) EPC.

1. A data structure (100M) that (i) models a liquid-propellant rocket engine, LPRE, (100) as a control target¹ and (ii) is for use in a multivariable closed-loop control of the LPRE, the data structure defining a non-linear state-space² model for model predictive control, MPC, the non-linear state-space model being linearizable at least in a reference point in the operating range of the LPRE and the data structure comprising:
a state vector ***x*** having 3 state variables being i) a combustion chamber pressure p_{cc}, ii) a fuel mass flow ṁ_{fu} and iii) an oxidizer mass flow ṁₒₓ;
a control vector ***u*** having 2 controllable inputs being i) a fuel throttle valve opening degree A_{VF} and ii) an oxidizer throttle valve opening degree A_{VO};
an output vector ***y*** having 3 measured variables being i) a measured combustion chamber pressure p_{cc,meas}, ii) a fuel injection pressure p_{injF} and iii) an oxidizer injection pressure p_{injO}, wherein the measured combustion chamber pressure P_{cc,meas} is measured directly after injection into a thruster of the LPRE and is then corrected by a correction factor CF_{pcc,meas} to compute the pressure at the throat of the thruster to become the combustion chamber pressure p_{cc} of the state vector ***x**³*; and
a non-controllable vector ***w*** having 2 time-dependent, non-controllable variables affecting the output vector ***y***, being fuel tank pressure p_{TankF} and oxidizer tank pressure p_{TankO}⁴, wherein:
the model is linearizable in the reference point to yield a linear system of equations.
¹ cf. original description page 10, lines 19 and 20
² cf. original description page 10, lines 36 and 37; page 11, line 35
³ cf. **original dependent claim 9** + original description page 12, lines 12 to 16
⁴ cf. **original dependent claim 2**

2. A linear Kalman⁵ filter (103) for use in a feedback loop of a closed-loop control system (S)⁶ for multivariable closed-loop control of a liquid-propellant rocket engine, LPRE (100), the linear Kalman filter having a linear filter function that uses the non-linear state-space model for model predictive control, MPC, according to the data structure (100M) of claim 1, wherein the linear Kalman filter is configured to⁷:
- linearize the non-linear state-space model in the reference point to yield the linear equation ***x_{KF}** =* ***C⁻¹* ·** ***y,*** where ***C*** is a system observation matrix so as to reconstruct the state vector ***x_{KF}*** from the output vector ***y***,
- measure the values of the combustion chamber pressure p_{cc,meas}, the fuel injection pressure p_{injF} and the oxidizer injection pressure p_{injO} by at least one sensor⁸, and
- reconstruct the fuel mass flow ṁ_{fu} and the oxidizer mass flow ṁₒₓ based on the measured combustion chamber pressure p_{cc,meas}, the fuel injection pressure p_{injF} and the oxidizer injection pressure p_{injO} without involvement of any dedicated mass flow sensor⁹.
⁵ cf. **original dependent claim 4**
⁶ cf. **original dependent claim 10**
⁷ cf. Guidelines for Examination, chapter F-IV.3.9.1.(ii) (apparatus claim)
⁸ cf. **original dependent claim 5**
⁹ cf. **original dependent claim 5**

3. The linear Kalman filter of claim 2, further configured to:
- receive, as input, an extended output vector ***yₘ*** having the i) measured combustion chamber pressure p_{cc,meas}, ii) the fuel injection pressure p_{injF}, iii) the oxidizer injection pressure p_{injO}, iv) a fuel injection temperature T_{injF} and v) an oxidizer injection temperature T_{injO}, and a non-controllable vector ***w*** having 2 time-dependent, non-controllable variables affecting the extended output vector ***yₘ,*** being fuel tank pressure p_{TankF} and oxidizer tank pressure p_{TankO}.

4. A multivariable closed-loop controller (101) for use as a controller of a liquid-propellant rocket engine, LPRE, (100) as a control target a in a closed-loop control system (S)¹⁰, the multivariable closed-loop controller using the non-linear state-space model for model predictive control, MPC, according to the data structure (100M) of claim 1, wherein the multivariable closed-loop controller is configured to¹¹:
- linearize the model in the reference point to yield the linear equation ***ẋ*** ***= Ax** + **Bu,*** where ***A*** and ***B*** are matrices having stable poles to yield a controllable system, and
- reconstruct the state vector ***x*** based on the output vector ***y*** by:
-- receiving input from at least one sensor to measure the combustion chamber pressure p_{cc,meas}, the fuel injection pressure p_{injF} and the oxidizer injection pressure p_{injO}, and
-- reconstructing, while not receiving input from any mass flow sensor, the fuel mass flow ṁ_{fu} and the oxidizer mass flow ṁₒₓ based on the measured combustion chamber pressure p_{cc,meas}, the fuel injection pressure p_{injF} and the oxidizer injection pressure p_{injO}.
¹⁰ cf. **original dependent claim 10**
¹¹ cf. Guidelines for Examination, chapter F-IV.3.9.1.(ii) (apparatus claim)

5. A closed-loop control system (S) comprising:
the multivariable closed-loop controller (101) of claim 4 configured to control the LPRE as a control target; and
the linear Kalman filter (103) of claim 2 or 3 in a feedback loop from the multivariable closed-loop controller.

6. The closed-loop control system of claim 5, wherein:
linearization and control operation is performed in real-time.

7. The closed-loop control system of claim 6, wherein:
linearization and control operation is iterated discretely once per predetermined time period.

8. The closed-loop control system of claim 7, wherein the time period is 50 ms.

9. The closed-loop control system of any one of claims 5 to 8, further comprising:
a feed-forward, FF, component (102) in an open-loop portion of the system, wherein the FF component is configured to:
- receive, as input, high-level reference values being i) a reference mixture ratio MR_{ref} of fuel and oxidizer and ii) a reference combustion chamber pressure p_{cc,ref}, and
- output, based on the input, a reference vector ***yᵣ*** comprising i) the reference combustion chamber pressure p_{cc,ref}, ii) a reference fuel injection pressure p_{injF,ref} and iii) a reference oxidizer injection pressure p_{injO,ref},
wherein a difference between the reference vector ***yᵣ*** as a target vector and the output vector yas an actual vector yields an error vector ***yₑᵣᵣ*** to be input into the multivariable closed-loop controller.

10. The closed-loop control system of claim 9, wherein the FF component is further configured to:
- output, based on the input, at least one additional reference value of iv) a reference fuel mass flow ṁ_{fu,ref}, v) a reference oxidizer mass flow ṁ_{ox,ref}, vi) a reference fuel throttle valve opening degree A_{VF,ref} and vii) a reference oxidizer throttle valve opening degree A_{VO,ref}, and
- provide the reference vector ***yᵣ*** and the at least one additional reference value to the multivariable closed-loop controller and the linear Kalman filter so as to enable linearization at the reference point.
